# EUROPÄISCHE PATENTANMELDUNG

(11) **EP 0 809 097 A1**
(43) Veröffentlichungstag der Anmeldung: **26.11.1997**
(21) Anmeldenummer: 97108069.2
(22) Anmeldetag: 17.05.1997
(51) Int. Cl.: G01M 17/02, G01N 27/83

(54) **Vorrichtung und Verfahren zur Ermittlung von Fehlern in der Anordnung von Festigkeitsträgern aus magnetisierbarem Material in Karkassenlagen im Seitenwandbereich des Reifens**

(30) Priorität: 25.05.1996 DE 19621198
(71) Anmelder: Continental Aktiengesellschaft, 30165 Hannover (DE)
(72) Erfinder: Kaefer-Hoffmann, Michaela, 30900 Wedemark (DE); Bosch, Werner, 30823 Garbsen (DE)

(57) **Zusammenfassung**

Beschrieben werden ein Verfahren und eine Vorrichtung zur Überprüfung auf das Vorhandensein von Fehlern im Abstand von parallelen Festigkeitsträgern aus Stahl im Karkassenseitenwandbereich eines Fahrzeugluftreifens bzw. eines Reifenrohlings.

Der Prüfling (13) wird auf die Antriebsrolle (8) und die Lagerrolle (18) der Prüfvorrichtung gestellt, so daß er mit seiner Seitenwand and den Führungsschultern der Antriebsrolle (8) und der Führungsrolle (18) und an der Rolle (7) aufliegt. Im Anschlus daran wird der Meßkopf (1) entlang der Führungsschiene (2) nach unten verschoben und die Antriebrolle (8) mit der Hilfe eine gesteuerten Antriebsmotor (9) bekannter Art verdreht, so daß der Prüfling (13) durch Friktion zwischen Lauffläche und Oberfläche der Antriebsrolle (8) um die Achse des Prüflings (13) verdreht wird. An nach unten gerichteten Verlängerungen des Meßkopfes (1) ist jeweils ein Sensor (5) bzw. (6) kollinear unter Einschließung des Winkels α zur Waagerechten angeordnet. Die Sensoren (5) und (6) arbeiten nach dem Magnetfeldstreuverfahren. Unterschiede im Abstand zwischen benachbarten Festigkeitsträgern aus Stahl induzieren in dem heterogenen Magnetfeld eine Veränderung (6) des Magnetsfelds, wobei der resultierende Magnetfeldstärkeverlauf von den Sensoren (5) und (6) gemessen und beispielweise als elektrischer Spannungsverlauf an die Auswerteeinheit (11) weitergeleitet wird.

## Beschreibung

Die Erfindung betrifft eine Vorrichtung sowie ein Verfahren zur Ermittlung von Fehlern in der Anordnung von Festigkeitsträgern aus magnetisierbarem Material, insbesondere aus Stahl, in Karkassenlagen im Seitenwandbereich eines unvulkanisierten Reifenrohlings oder eines vulkanisierten Fahrzeugluftreifens.

Fahrzeugluftreifen sind üblicherweise mit einer oder mehreren Karkassenlagen mit darin eingebettenen parallelen Festigkeitsträgern ausgebildet. Die Karkassenlagen reichen üblicherweise von einem Wulstkern über die Seitenwand, den Kronenbereich, die andere Seitenwand bis zum zweiten Wulstkern. Während der Kronenbereich üblicherweise zusätzlich durch Gürtellagen verstärkt ist, erhält die Seitenwand ihre Festigkeit und ihre Widerstandsfähigkeit gegenüber Fremdkörpern von außen sowie gegenüber Innendruck hauptsächlich durch die Festigkeitsträger der Karkasse. Dementsprechend können sich Unregelmäßigkeiten in der Lage der Festigkeitsträger der Karkasse gerade im Seitenwandbereich besonders nachteilig auswirken. So führen Unregelmäßigkeiten in Form von vergrößerten Abständen zwischen Festigkeitsträgern zu regelrechten Schwachstellen der Seitenwand. Der Reifeninnendruck kann im Betriebszustand eines Fahrzeuges zur Überstrapazierung des Gummimaterials, zur Ausbeulung und langfristig zum Aufreißen des Gummimaterials führen. Fremdkörper können in diesem Bereich besonders leicht eindringen und somit ebenfalls Platzen des Reifens zur Folge haben. Auch kleinere Beschädigungen des Gummimaterials des Reifens können leicht zum Reißen des Gummimaterials im Bereich der Schwachstelle führen.

Da solche Fehler in der Anordnung der Festigkeitsträger auf verschiedenste Weise noch während des Reifenaufbaus und bei der Erzeugung der Torusform entstehen können, ist es wichtig, durch Qualitätskontrollen des aufgebauten torusförmigen Fahrzeugluftreifens Anordnungsabweichungen der Festigkeitsträger im Seitenwandbereich, die über auf Erfahrungswerten basierenden zulässigen maximalen Werten liegen, frühzeitig zu erkennen. Ebenso ist es wichtig, bei runderneuerten Reifen oder bei bereits gebrauchten Reifen, z.B. nach stärkerem Kontakt der Seitenwand mit Bordsteinkanten oder anderen harten Gegenständen derartige unzulässige Unregelmäßigkeiten frühzeitig zu erkennen.

Es ist üblich, Fahrzeugluftreifen mit Karkasse, mit Festigkeitsträgern aus Stahl im Anschluß an die Vulkanisation hierzu zu röntgen. Der Reifen wird dabei rundum geröntgt. Hierdurch läßt sich sowohl die Umfangsposition von unzulässigen Lageabweichungen als auch deren Größe durch Vermessen der Abstände genau ermitteln. Derartige Röntgenanlagen erfordern einen hohen Aufwand an Kosten für Anschaffung und Wartung. Der Verschleiß der kostenaufwendigen, empfindlichen Röntgenröhren ist hoch. Zum Schutz der Umwelt und der Gesundheit des Bedienungspersonals ist ein hoher Aufwand an zusätzlichen Einrichtungen, beispielsweise zur Abschirmung der Röntgenstrahlung, erforderlich. Zur Überprüfung in der Serienproduktion ist die ständige optische Auswertung der Röntgenbilder mit der darauf befindlichen Vielzahl von parallelen eng benachbarten dunklen Festigkeitsträgern im hellen leuchtenden Umfeld für das Bedienungspersonal ermüdend. Zum Schutz vor Röntgenstrahlung und vor Schäden durch Ermüdung am Bildschirm bei häufiger Betätigung ist zusätzlicher Aufwand erforderlich. Die Röntgenanlage erfordert eine Vielzahl zusätzlicher Aggregate, beispielsweise eine eigenständige Kühlung, eine besondere kostenintensive Steuer- und Auswerte-Elektronik. Der gesamte Meßstand mit allen Schutzmaßnahmen ist mit seiner Vielzahl von Bauteilen sehr raumgreifend.

Da für jede Reifenmessung eine Mindestmeßzeit erforderlich ist, bedeutet die Erhöhung der Produktionszahlen über ein bestimmtes Maß hinaus die Erfordernis der Anschaffung zusätzlicher kostenintensiver Röntgenanlagen mit jeweils den genannten Nachteilen, z.B. mit nochmals dem gleichen Aufwand für Wartung, Schutz, Montage, Bedienung und Bereitstellung von Raum. Aufgrund des hohen Aufwands werden diese erst im Endstadium der Reifenfertigung, in der alle fertigungsbedingten Lageabweichungen festgestellt werden können, eingesetzt. Da auch noch bei der Resterhebung in der Vulkanisationsanlage und während der Vulkanisation Lagefehler der Festigkeitsträger erzeugt werden können, werden derartige Röntgeneinrichtungen dementsprechend erst am fertig vulkanisierten Fahrzeugreifen eingesetzt. Reifen mit unzulässigen Lageabweichungen sind jedoch in diesem späten vulkanisierten Zustand hinsichtlich dieser Fehler nicht reparierbar und als Ausschuß kaum wiederverwertbar.

Aufgrund des hohen Aufwands für Werkstätten werden Überprüfungen während der Lebensdauer des Reifens nur beschränkt durchgeführt.

Aus der DE 42 23 248 A1 ist es bekannt, Fehlstellen in breiten Stahlcordstreifen mit dem Magnetfeldstreuverfahren zu ermitteln, beispielsweise bei der Herstellung von flachen Karkassbändern, wobei die Stahlcordstreifen über eine Metallplatte so hinweggezogen werden, daß zwischen Bewegungsrichtung und Ausrichtung des Stahlcordes ein Winkel größer 0° besteht. Unter der Metallplatte sind Detektoren vom Typ SND 6 der Firma Roland Elektronik GmbH, D-7538 Keltern 2, die bis dahin zur Überwachung von Schweißnähten eingesetzt wurden, angeordnet. Bei diesem Verfahren erzeugen die Detektoren ein heterogenes Magnetfeld, durch das die Stahlcordstreifen in Magnetfeldrichtung bewegt werden und dabei das heterogene Magnetfeld ihrerseits in Abhängigkeit von den Abständen der Stahlcorde zueinander beeinflussen. Die Detektoren ermitteln die durch die Induktion resultierende Magnetfeldstärke an Fehlstellen und zeigen die Änderung unmittelbar an. Der Cordstreifen wird angehalten und die Fehlstelle unmittelbar entfernt, so daß das bandförmig hergestellte Karkassenmaterial in einwandfreiem Zustand zur weiteren Herstellung des Reifens herangezogen werden kann. Auf diese Weise lassen sich bei der Herstellung der Karkassenbänder vorhandene Fehlstellen im Karkassenmaterial ermitteln und beseitigen.

Lagefehler zwischen den Festigkeitsträgern der Karkasse, die beim Aufbau des Reifens aus den verschiedenen Lagen und Schichten, beim Transport der Lagen zum Aufbau, bei der Erhebung zur Erzeugung der Torusform, beim Verbinden des Karkassenpaketes mit Laufstreifen und Gürtel, beim Auf- und Abnehmen von Aufbautrommeln oder bei sonstigen Tätigkeiten nach der Fertigstellung des flachen, ebenen, bandförmigen Karkassen-Halbfabrikats erzeugt werden, sind mit dem Verfahren und der Vorrichtung der DE 42 23 248 A1 nicht feststellbar. Um derartige Fehler festzustellen, muß bei praktischer Umsetzung wieder auf das Röntgenverfahren mit seinen Nachteilen zurückgegriffen werden.

Der Erfindung liegt die Aufgabe zugrunde, eine Vorrichtung und ein Verfahren zur einfachen zuverlässigen Erkennung von Fehlern in der Anordnung von Festigkeitsträgern aus magnetisierbarem Material, insbesondere aus Stahl, in der Karkassenlage im Seitenwandbereich eines torusförmigen Reifenrohlings oder eines vulkanisierten Fahrzeugluftreifens zu schaffen. Die Aufgabe wird erfindungsgemäß durch die Vorrichtung gemäß den Merkmalen von Anspruch 1 sowie durch das Verfahren gemäß den Merkmalen von Anspruch 11 gelöst. Ein zu überprüfender Reifenrohling bzw. Fahrzeugluftreifen wird mit Hilfe der Mittel zur drehbaren Lagerung um seine Achse in der Vorrichtung drehbar zur Überprüfung aufgenommen und mit den Mitteln zum gesteuerten Verdrehen in seiner Drehlage verändert, so daß die Festigkeitsträger der Seitenwand, die unter Einschluß eines Winkels größer als O° zur Umfangsrichtung ausgerichtet sind, im Seitenwandbereich am Sensor zur Ermittlung der von durch Fehler in der Anordnung der Festigkeitsträger in einem erzeugten heterogenen Magnetfeld durch die gegenüber dem heterogenen Magnetfeld bewegten Festigkeitsträger erzeugte Induktion resultierenden Magnetfeldstärke, wobei der Sensor zumindest während der Messung in einer radialen Meßposition im radialen Bereich der Seitenwand unverändert angeordnet ist, unter Einschluß eines Winkels zwischen Festigkeitsträgern und Bewegungsrichtung und zwischen Festigkeitsträgern und Magnetfeldrichtung vorbeibewegt werden und somit das heterogene Magnetfeld durch Induktion unter Veränderung der resultierenden Magnetfeldstärke beeinflussen. Die durch die Fehler in der Anordnung der Festigkeitsträger erzeugten Magnetfeldstärkeänderungen werden von den Sensoren gemessen und an Mittel zur Auswertung weitergeleitet. Mit dieser Vorrichtung ist es in einfacher Weise möglichauch bei einem torusförmig aufgebauten Reifenrohling bzw. einem fertiggestellten vulkanisierten Fahrzeugluftreifen mit Hilfe des einfachen Magnetfeldstreuverfahrens die Lage von Fehlern in der Anordnung von Festigkeitsträgern zu ermitteln. Eine derartige Anlage ist einfach und kostengünstig. Aufwand zum Schutz von Umwelt und Gesundheit vor Röntgenstrahlen entfällt. Die magnetischen Sensoren sind verschleißarm. Aufwand für Röntgenrohr, Diodenzahlensystem zur Bilderzeugung von Röntgenbildern und eigenständige Kühlung entfallen. Der ermüdende optische Aufwand zur Überwachung von Röntgenbildern entfällt. Eine solche Vorrichtung ist baulich einfach und raumsparend ausbildbar. Der geringe Aufwand für Herstellung, Wartung und die fehlenden Schutzeinrichtungen vor Röntgenstrahlen ermöglichen einen wirtschaftlichen Einsatz auch bereits vor Vulkanisieren des Reifens, so daß bereits am unvulkanisierten Reifenrohling die bei der Torusbildung und vor der Vulkanisation erzeugten Fehler erkannt werden. Die in diesem frühzeitigen Stadium mit Fehlern erkannten Reifenrohlinge können einfacher überarbeitet oder aufgetrennt und wiederverwertet werden. Die Vorrichtung ermöglicht außerdem die Überprüfung bereits fertiggestellter vulkanisierter Fahrzeugluftreifen, bei der zusätzlich die während der Resterhebung in der Vulkanisationsmulde und bei der Vulkanisation erzeugten Fehler festgestellt werden. Insbesondere mit Mitteln zum Einstellen der radialen Position des Sensors in Abhängigkeit vom Reifendurchmesser in eine radiale Sollposition des Reifens läßt sich die für jede Reifendimension ideale Meßposition im Seitenwandbereich einstellen, so daß auch unterschiedlichste Reifendimensionen einfach und individuell je nach Erfordernis überprüft werden können. Die Optimierung der Meßqualität wird insbesondere mit Mitteln zum Einstellen des axialen Abstandes zwischen zu messender Seitenwand und dem Sensor ermöglicht. Hierdurch läßt sich der optimale Abstand zwischen Sensor und Seitenwand individuell für jede Reifenbreite einstellen.Der geringe Aufwand ermöglicht flexiblen Wechsel des Einsatzortes und die einfache kostengünstige Überprüfung an Fahrzeugreifen während ihres ganzen Lebens, beispielsweise in Werkstätten.

Die Aufgabe wird auch durch das Verfahren gemäß den Merkmalen vom Anspruch 11 gelöst. Ohne großen Bedienungsaufwand wird zunächst in einem ersten Verfahrensschritt, bei dem der Reifenrohling bzw. der Fahrzeugluftreifen in einem ersten Winkelbereich verdreht wird, der durch die Anordnung der einzelnen Festigkeitsträger in diesem Winkelbereich im heterogenen Magnetfeld beim Bewegen durch Induktion resultierende Magnetfeldstärkeverlauf gemessen und über diesen Winkelbereich der Mittelwert ermittelt. Erst in einem anschließenden Verfahrenschritt, bei dem in einem weiteren Winkelbereich beim Weiterdrehen des Reifens der über diesen Verdrehwinkel erzeugte resultierende Magnetfeldstärkeverlauf ermittelt wird, wird dieser Magnetfeldstärkeverlauf mit dem als Bezugswert dienenden im ersten Verfahrensschritt vorermittelten Mittelwert verglichen und der Verlauf der Abweichungen des Magnetfeldstärkeverlaufs zum Mittelwert ermittelt. Die Abweichungen werden über den Winkelbereich, d.h. über den Umfangsbereich des Prüflings mit vorgegebenen Sollwerten für die maximal zulässigen Abweichungen vom Mittelwert verglichen. Die Umfangsposition der Abweichungen, die außerhalb des Sollwerts liegen, stellen die Umfangspositionen am Prüfling dar, an denen benachbarte Festigkeitsträger Lageabweichungen über den dem Sollwert entsprechenden zulässigen maximalen Abweichungswerten aufweisen. Diese Positionen werden als Drehwinkel bzw. als Umfangsposition von Anordnungsfehlern benachbarter Festigkeitsträger in der Reifenseitenwand angezeigt. Auf diese Weise läßt sich für jeden Reifen individuell die Lage von Fehlern in der Anordnung der Festigkeitsträger durch Mittelwertermittlung des gemessenen Magnetfelds an diesen Reifen und anschließende individuelle Abweichungsermittlung vom Mittelwert durch Vergleich mit dem als Maß für die zulässige Toleranz dienenden Sollwert einfach und zuverlässig ermitteln. Der Sollwert kann je nach Anforderung an den zu überprüfenden Reifen, an dessen Aufbau und die dadurch bedingten maximale Zulässigkeiten für Abweichungen von einem optimalen Wert für den Abstand zwischen benachbarten Festigkeitsträgern vorgegeben werden. Der große Aufwand, der zur Durchführung der Ermittlungen mit Röntgenverfahren erforderlich ist, entfällt weitgehend.

Das Verfahren gemäß den Merkmalen von Anspruch 12 ermöglicht zusätzlich die individuelle Ermittlung der Größe der Anordnungsfehler, wobei die Anwendung des Röntgenmeßverfahren nicht mehr für jeden Fahrzeugluftreifen bzw. Rohling erforderlich ist, sondern lediglich bei solchen Fahrzeugluftreifen bzw. Reifenrohlingen, bei denen mittels Magnetfeldstreuverfahren bereits das Vorhandensein und die Position solcher Fehler festgestellt worden ist. Der Einsatz und die Gefahren für die Gesundheit von Mensch und Umwelt werden hierdurch auf ein Minimum an zeitlicher Belastung reduziert. Unter Einbezug einer Röntgeneinrichtung kann somit auch eine hohe Produktionszahl an Reifen sicher und qualitativ zuverlässig auf Lage und Größe von Anordnungsfehler von Festigkeitsträgern in der Reifenseitenwand überprüft werden unter Minimierung des Röntgeneinsatzes. Die Kenntnis der Lage von Fehlern in der Reifenseitenwand ermöglicht die Reduktion von Röntgenbildern auf einen kleinen Umfangsbereich des Reifens im Bereich des Fehlers. Eine Rundum-Röntgung ist nicht erforderlich. Somit ist es auch möglich, einfachere Röntgeneinrichtungen, die lediglich Abschnitte eines Reifens überprüfen können, einzusetzen.

Durch Anspruch 2 wird ein bevorzugter einfach mit wenigen baulichen Mitteln auszubildender Verdrehmechanismus beansprucht. Insbesondere wenn der Fahrzeugluftreifen durch seinEigengewicht mit dem Friktionsmittel in Friktionskontakt steht, ist die Herstellung und Beibehaltung des Antriebskontakts einfach sichergestellt. Durch die Ausbildung gemäß den Merkmalen von Anspruch 3 wird eine Lagerung des Reifens durch einfaches Einlegen auf die seitlich geneigte Ebene in seitlich gekippter Lagerposition möglich. Der Reifen liegt seitlich auf den seitlichen Stützflächen auf und kann von einer anderen Seite eingelegt bzw. entnommen werden. Durch zusätzliche Ausbildung mit umlaufendem Friktionsmittel, das mit der Lauffläche nach Einlegung in Friktionskontakt steht, kann der eingelegte Reifen unmittelbar verdreht werden. Insbesondere durch Herstellung und Aufrechterhaltung des Friktionskontakts aufgrund des Eigengewichts des Prüflings ist der Betrieb der Vorrichtung unmittelbar nach Einlegen sicher gewährleistet. Parallele Auflagerollen zur Stützung der Lauffläche und daran ausgebildete Schultern, die in Zusammenwirkung mit einer zur seitlichen Auflagefläche komplanaren parallel zur Äquatorebene des Prüflings in dessen Meßposition ausgebildeten Auflagefläche einer Stützrolle mit einer radialen Richtungskomponente eine seitliche mitverdrehbare Stützfläche bilden, stellen eine einfache Lagerung bei sicherer verlustarmer Verdrehbarkeit sicher.

Besonders einfach ist die Vorrichtung, wenn eine der Auflagerollen die angetriebene Friktionsrolle ist.

Die Ausbildung der Vorrichtung gemäß den Merkmalen von Anspruch 4 ermöglicht ein einfaches Positionieren des Sensors in vorbestimmter radialer Position im Bereich der Seitenwand eines Reifens unabhängig von der Dimension des Reifens. Die Halteeinrichtung des Sensors zur Ermittlung der Fehler wird nach Einlegen des Reifens solange radial zur Lauffläche hin verschoben, bis mit Hilfe der Mittel zum Erfassen der radialen Position die zur Messung gewünschte radiale Position erreicht ist. In dieser radialen Position erfolgt die Ermittlung.
ImAnschluß an die Ermittlung kann die Halteeinrichtung wieder radial nach außen verschoben und der Prüfling entnommen werden. Bevorzugt wird die Ausbildung gemäß den Merkmalen von Anspruch 5. Unabhängig von der Reifendimension kann mit Hilfe des weiteren Sensors an jedem eingelegten Reifenrohling oder Fahrzeugluftreifen beim radialen Verschieben der Abstand zwischen Sensor und Lauffläche ermittelt und ein vorgegebener Abstand dieses Sensors zur Lauffläche und somit eine dem Abstand entsprechende radiale Position des Sensors zur Ermittlung im radialen Seitenwandbereich auch automatisiert eingestellt werden. Baulich einfach und zuverlässig automatisierbar ohne weiteren Steuerungsaufwand besteht der Sensor zur Abstandsmittlung aus einer Tastrolle, die mit einem Näherungsschalter gekoppelt ist, so daß die Tastrolle bei Kontakt mit der Lauffläche den Näherungsschalter automatisch betätigt und die Verschiebung stoppt.
Die Merkmale des Anspruchs 6 stellen eine technisch einfache, besonders zuverlässige Ausführung zur radialen Verschiebebewegung dar, bei der insbesondere die Ausbildung mit kugelgelagerter Spindel eine sehr genaue Einstellung und Beibehaltung der radialen Position ermöglicht.

Die Ausbildung der Vorrichtung gemäß den Merkmalen von Anspruch 7 ermöglicht eine besonders einfache individuelle automatisierte Einstellung eines optimierten seitlichen Abstandes zwischen Sensor zur Ermittlung der Lagefehler und Seitenwand. Unabhängig von der Reifendimension des jeweils gerade eingelegten Prüflings kann der optimierte seitliche Abstand in Abhängigkeit vom gemessenen Wert des seitlichen Abstandes durch die Mittel zum Einstellen eingestellt werden, so daß die Messung zur Ermittlung der Anordnungsfehler weitgehend unbeeinflußt von sonstigen Störgrößen und ohne Berührungskontakt zum Prüfling sichergestellt werden kann. Die Ausbildung gemäß den Merkmalen von Anspruch 8 stellt eine besonders einfache zuverlässige Ausbildung zur automatischen seitlichen Lageeinstellung des Sensors dar. Durch einfachen Spindelantrieb wird der Sensor in seiner Position bis in die Meßposition verschoben.

Bevorzugt wird die Vorrichtung mit jeweils einem Sensor zur Ermittlung beiderseits des Raumes für die Aufnahme des zu überprüfenden Reifenrohlings bzw. des Fahrzeugluftreifens zur drehbaren Lagerung ausgebildet. Hierdurch sind beide Seiten gleichzeitig auf Fehler hin überprüfbar. Durch Ausbildung des einen Sensors in der Vorrichtung mit fester seitlicher Position zur Seitenwand des drehbar gelagerten zu überprüfenden Fahrzeugluftreifen bzw. Reifenrohlings ist dieser Abstand unabhängig vom Reifen nach dessen Einlegen fest eingestellt. Nach Einlegung kann der andere seitlich einstellbare Sensor zur Ermittlung in die vorbestimmte Abstandsposition zur anderen Seitenwand eingestellt werden. Unabhängig von der Dicke des Reifens wird somit der gewünschte Abstand zwischen dem festen Sensor und der zugehörigen Reifenseitenwand durch Einlegen des Reifens bzw. des Reifenrohlings in die Lagerung erzeugt. Ohne beim Einlegen zu behindern, wird der zweite Sensor zur Ermittlung in die gewünschte Abstandsposition der anderen Reifenseitenwand eingestellt.

Die Erfindung ist im folgenden anhand der Figuren 1 bis 4 beispielhaft näher erläutert: Hierin zeigen
- Fig. 1: Prinzipdarstellung der Prüfeinrichtung mit zur Überprüfung eingelegtem Fahrzeugluftreifen,
- Fig. 2: Schematisches Diagramm des über den Reifenumfang eines Reifens ermittelten Magnetfeldstärkeverlaufs zur Ermittlung der Lage von Fehlern im Abstand zwischen benachbarten Festigkeitsträgern,
- Fig. 3: Röntgenbild zur Ermittlung der Größe des Abstandes im Bereich von ermittelten Fehlerpositionen,
- Fig. 4: Schematische Darstellung zur Erläuterung der Lage der Sensoren zur Verschiebebewegung und zur Lage der Festigkeitsträger beim Magnetfeldstreuverfahren.

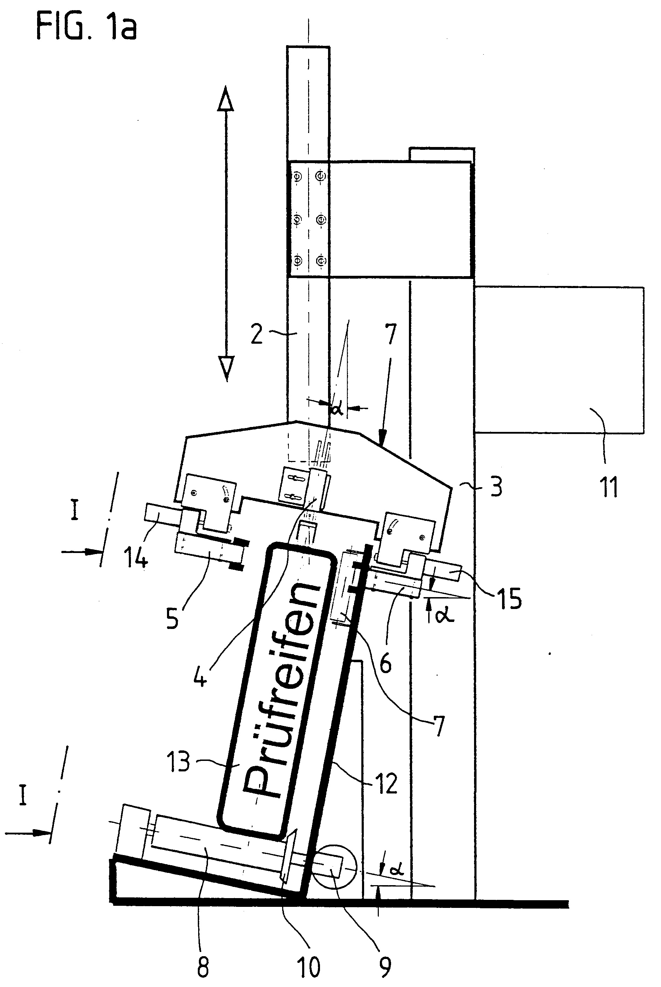

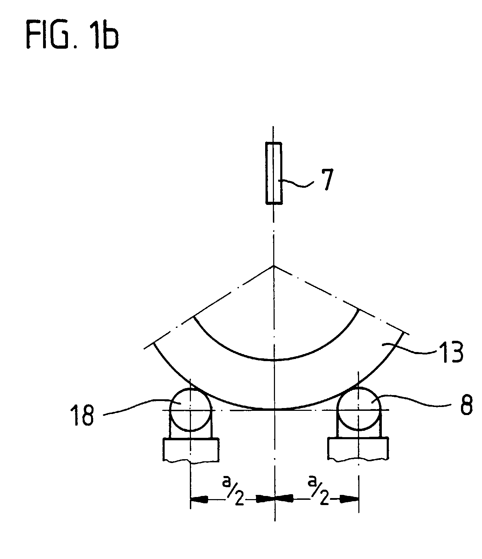

Wie in Fig. 1 dargestellt ist, ist an einem Gestell 3 der Prüfeinrichtung eine lotrecht nach unten gerichtete Führungsschiene 2 befestigt, an der verschiebbar gelagert ein Meßkopf 1 ausgebildet ist. Mit einem nicht dargestellten Antriebsmodul bekannter Art wird über ein ebenfalls nicht dargestelltes kugelgelagertes Spindelgetriebe der Meßkopf 1 entlang seiner Führungsschiene gesteuert angehoben oder abgesenkt. Im unteren Teil des Lagertisches 12 sind parallel eine Führungsrolle 8 und eine Antriebsrolle 18 mit Abstand a zueinander ausgebildet, wie in Figur 1a und 1b zu erkennen ist. Führungsrolle 8 und Antriebsrolle 18 sind jeweils mit einer Führungsschulter 10 ausgebildet. Die Führungsrolle 8 bzw. die Antriebsrolle 18 biegen in einer Ebene, die einen Winkel α zur Waagerechten einschließt. Im oberen Bereich des Lagertischs 12 ist eine Rolle 7 drehbar gelagert ausgebildet, deren Drehachse den Winkel α zur Lotrechten einschließt und deren vom Lagertisch 12 wegweisende Tangente in einer Ebene mit der vom Lagertisch 12 wegweisenden Schulterfläche der Führungsschultern 10 und vertikal zur Ebene der Achsen der Antriebs- und Führungsrolle liegt. Die Ebene schließt zur Lotrechten ebenfalls den Winkel α ein.

Zur Überprüfung auf das Vorhandensein von Fehlern im Abstand von parallelen Festigkeitsträgern aus Stahl im Karkassenseitenwandbereich eines Fahrzeugluftreifens bzw. eines torusförmigen Reifenrohlings wird der Prüfling 13 auf die Antriebsrolle 8 und die Lagerrolle 18 gestellt, so daß er mit seiner einen Seitenwand an den Führungsschultern der Antriebsrolle 8 und der Führungsrolle 18 und an der Rolle 7 aufliegt. Die Verlängerung der Drehachse der Rolle 7 schneidet, wie in Fig. 1b dargestellt ist, die Ebene zwischen den Drehachsen der Antriebsrolle 8 und der Führungsrolle 18 in der Mitte des Abstands a senkrecht.

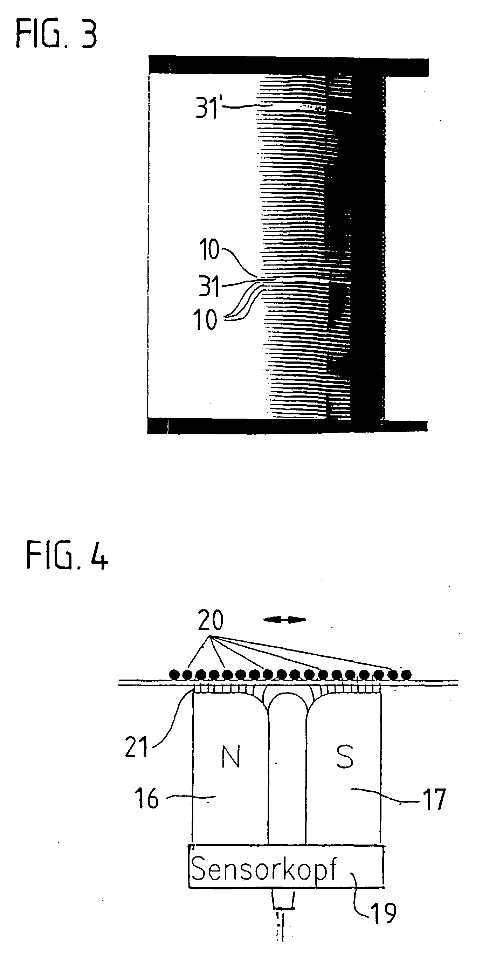

An nach unten gerichteten Verlängerungen des Meßkopfes 1 ist jeweils ein Sensor 5 bzw. 6 kollinear unter Einschließung des Winkel α zur Waagerechten angeordnet. Die Sensoren 5 und 6 sind Detektoren, die nach dem Magnetfeldstreuverfahren arbeiten, bei dem in einem heterogenen Magnetfeld induzierte Magnetfeldstärkeänderungen durch Messen der durch Induktion, die durch die Bewegung von längsorientierten Stahlcorden in deren radiale Richtung erzeugt wird, resultierenden Feldstärke gemessen werden. Wie in Fig. 4 zu erkennen ist, bilden Nordpol 16 und Südpol 17 des Permanentmagneten außerhalb des Polbereichs ein heterogenes Magnetfeld mit Feldlinien 21. ZU überprüfende parallele Stahlcorde 20 schließen in ihrer Orientierung einen Winkel großer 0° zur Ausrichteebene von Nord- und Südpol ein und werden entsprechend dem Bewegungspfeil von rechts nach links bzw. von links nach rechts, d.h. mit Richtungskomponente in radialer Richtung der Stahlcorde, zunächst über den einen Pol und dann über den anderen Pol bewegt. Der Sensorkopf 19 erfaßt Änderungen des heterogenen Magnetfelds während der Bewegung. Als Detektoren eignen sich Detektoren vom Typ SND 6 der Firma Rohland Elektronik GmbH, D-7538 Keltern 2, die üblicherweise für die Überwachung von Schweißnähten eingesetzt wurden. Die Sensoren 5 bzw. 6 sind mit einer Auswerteeinheit 11 bekannter Art verbunden. Zwischen den Sensoren 5 und 6 ist am Meßkopf 1 eine Rolle 4 mit Endschalter angeordnet.

Nach Einlegen eines Prüflings 13 mit seiner Lauffläche auf die Führungsrollen 18 und die Antriebsrolle 8 derart, daß er sich mit seiner einen Seite an den Schultern 10 und der Rolle 7 unter Einnahme des Neigungswinkels α zur Vertikalen abstützt, wird der Meßkopf 1 soweit mit Hilfe der kugelgelagerten Führungsspindel entlang der Führungsschiene 2 nach unten verschoben, bis eine am Meßkopf angeordnete Tastrolle 4 bekannter Art mit der Lauffläche des Prüflings 13 in Berührkontakt gerät und einen Näherungsendschalter betätigt. Durch Betätigung des Endschalters wird der Antrieb der Verschiebebewegung des Meßkopfs 1 gestoppt und der Meßkopf verbleibt in dieser eingestellten Position. Die Abstimmung der Lage der Rolle 4 mit Näherungsendschalter mit der Lage der Sensoren 5 und 6 ist dabei so gewählt, daß die Sensoren 5 und 6 in dieser eingestellten Position eine radiale Position des Prüflings 13 einnehmen, die den mittleren Seitenwandbereich des Prüflings erfaßt. Der Detektor ist derart voreingestellt, daß er ca. 2 mm Abstand zu der zu ihm weisenden Reifenseitenwand einnimmt. Der Sensor 5 ist in der Kollinearen mit dem Sensor 6 am Meßkopf 1 verschiebbar ausgebildet.
Mittels eines weiteren nicht dargestellten am Sensor 5 befestigten bekannten, beispielsweise kapazitiven, Sensors zur Abstandsmessung, der den Abstand zu der ihm zuweisenden Seitenwand des Prüflings erfaßt, wird der Abstand vomn Sensor 5 zur Seitenwand ermittelt und der Sensor 5 vom Stellmotor 14 bekannter Art über eine kugelgelagerte Antriebsspindel bis auf 2 mm Abstand an diese Seitenwand herangefahren.

Im Anschluß daran wird die Antriebsrolle 8 mit Hilfe eines gesteuerten Antriebsmotors 9 bekannter Art verdreht, so daß der Prüfling 13 durch Friktion zwischen Lauffläche und Oberfläche der Antriebsrolle 8 um die Achse des Prüflings 13 unter sicherer Auflage auf der Antriebsrolle 8 und auf der Führungsrolle 18 durch das Eigengewicht des Prüflings undunter Abstützen an der frei drehbaren Rolle 7 und den Schultern 10 verdreht wird.

Der Prüfling 13 wird zunächst ca. um 90° verdreht, wobei die Stahlcorde im Seitenwandbereich unter Einschluß eines Winkels großer 0° in ihrer Ausrichtung zur Bewegungsrichtung im Bereich der Sensoren 5 und 6 an den Sensoren 5 und 6, wie zu Fig. 4 beschrieben, vorbeibewegt werden. Unterschiede im Abstand zwischen benachbarten Festigkeitsträgern aus Stahl induzieren in dem heterogenen Magnetfeld eine Veränderung des Magnetfelds, wobei der resultierende Magnetfeldstärkeverlauf von den Sensoren 5 und 6 gemessen und beispielsweise als elektrischer Spannungsverlauf an die Auswerteeinheit 11, einem Computer weitergeleitet wird.

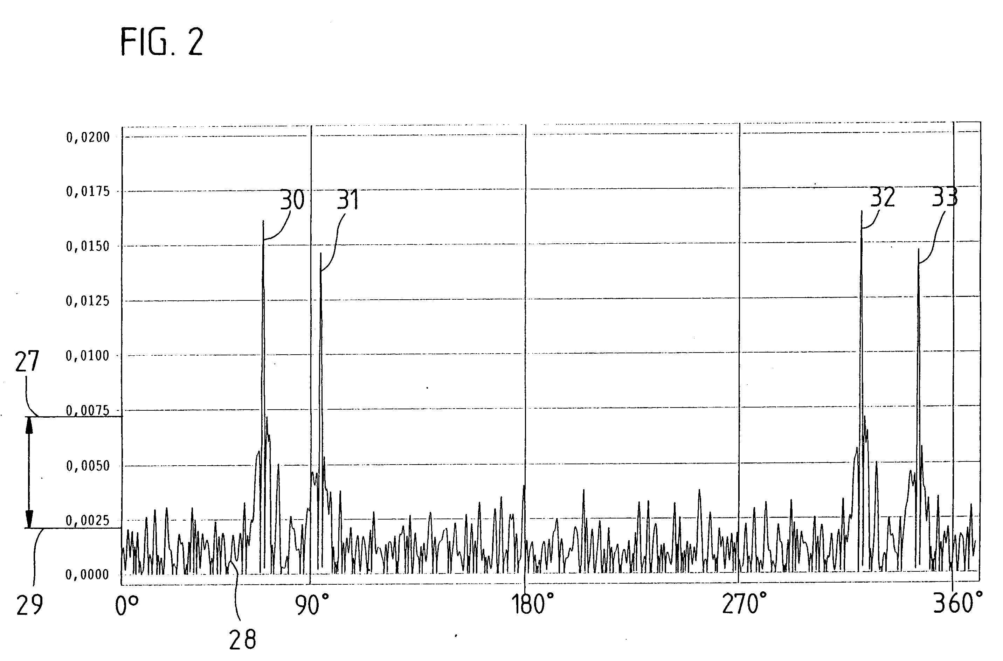

Der in diesem Umfangsmeßbereich gemessene Magnetfeldstärkeverlauf wird von der Auswerteeinheit 11 gemittelt und der gemittelte Wert wird als Bezugswert für den weiteren Meßverlauf herangezogen. Der Prüfling 13 wird um weitere 360° verdreht, wobei die Sensoren 5 und 6 auch in diesem Drehwinkelbereich den resultierenden Magnetfeldstärkeverlauf messen und an die Auswerteeinheit 11 weiterleiten. In der Auswerteeinheit 11 wird ermittelt, ob während der 360°-Umdrehung Abweichungen des Magnetfeldstärkeverlaufs von dem Mittelwert auftreten, die über eine vorgegebene zulässige Toleranz hinausgehen, wie im Diagramm von Fig. 2 schematisch dargestellt ist.

Die Abszisse des Diagramms steht für den Drehwinkel ω. Die Ordinate steht für die skalierte magnetische Feldstärke. Die Kurve 28 gibt den magnetischen Feldstärkeverlauf an. Ausgehend vom ermittelten Mittelwert 29 ergibt sich der Grenzwert 27 für die zulässigen resultierenden magnetischen Feldstärken aus dem vorgegebenen Maß Δ zul. für die zulässigen Abweichungen. Die über dem Grenzwert liegenden Amplituden der Kurve 28 geben die Lage von Fehlern durch zu großen Abstände zwischenbenachbarten Stahlcorden an. In Fig. 2 sind dies die Fehlerpositionen 30, 31, 32, 33. Aus der Abszisse ergibt sich die zugehörige Winkelposition am Prüfling 13.

In Fig. 2 sind lediglich die besonders gefährlichen Abweichungen nach oben vom Mittelwert, die die Lage von Fehlern durch zu große Cordabstände angeben, dargestellt.
Falls erforderlich, kann durch Vergabe eines Toleranzwertes für zu enge Abstände durch Eintragung dieses Toleranzwertes vom Mittelwert nach unten hin auch analog festgestellt werden, in welcher Winkelposition unzulässige zu enge Abstände auftreten.

Der Prüfling wird anschließend in chronologischer Reihenfolge in die entsprechenden Winkelpositionen der Fehler 30, 31, 32, 33 verdreht, so daß die Fehler des Prüflings jeweils in Positionen gegenüber von einer nicht dargestellten Markierungseinrichtungen bekannter Art, beispielsweise einer vorgegebenen Marke in Form eines am Gestell ausgebildeten Zeigers, stehen. Hier kann beispielsweise manuell oder automatisch, beispielsweise farbig die Position am Prüfling gekennzeichnet werden. Ebenso ist es denkbar, anstelle des mechanischen Zeigers direkt mit einem gesteuerten Markierungsstift bekannter Art diese Position am Prüfling zu markieren. Es ist auch denkbar, daß eine derartige Marke am Sensor 5 bzw. 6 ausgebildet ist.

Der Abstand zwischen Sensoren 5 und 6 und Reifenseitenwand zur Überprüfung wird so gewählt, daß ein Berührungskontakt mit der Reifenseitenwand ausgeschlossen und daß er noch so nahe an der Reifenseitenwand angeordnet ist, daß die Corde möglichst nahe genug zur sicheren Erfassung an den Magneten vorbeibewegt werden. Beispielsweise beträgt der Abstand 2 mm.

Nach der Messung wird der Sensor 5 wieder vom Prüfling 13 mit dem Stellmotor 14 seitlich wegbewegt und der Meßkopf 1 mit Hilfe der angetriebenen Kugellagerspindel entlang derFührungsschiene 2 angehoben. Der Prüfling 13 wird von Antriebsrolle 8 und Führungsrolle 18, beispielsweise durch seitliches Herunterrollen, entnommen. Motor 14, Motor 9 und Antriebsmodul zum Absenken bzw. Anheben stehen mit dem Computer 11 in Verbindung und werden von diesem gesteuert.

Der zweite Sensor 6 ist im vorgegebenen Abstand zur Anlageebene des Prüflings 13 befestigt. Es ist auch denkbar, auch den zweiten Sensor 6 mit Hilfe eines Stellmotors 15 und einer kugelgelagerten Führungsspindel in der Kollinearen mit dem Detektor 5 ebenfalls in der seitlichen Position zur Anlageebene für Prüflinge 13 verstellbar auszubilden. Hierdurch wird ein Feineinstellen des Abstandes und ein Nachstellen bei Wartungsarbeiten erleichtert.

Durch Eingabe und Speicherung von Toleranzsollwert für unterschiedliche Prüflinge kann in Abhängigkeit von den Leistungsanforderungen an den jeweiligen Reifen die aufgrund von Erfahrungswerten zulässige Toleranz an Lageabweichungen berücksichtigt werden.

Prüflinge 13, die keine Abweichungen vom zulässigen Toleranzwert aufweisen, verlassen die Prüfeinrichtung ohne weitere Beanstandung. Bei Nachweis von Abweichungen über den jeweils zugelassenen Toleranzwert hinaus wird der Prüfling 13 aus der weiteren Produktion herausgenommen. Dabei ist es denkbar, zur genauen Feststellung der Größe und der Qualität die Fehlerstelle anschließend in einer bekannten Röntgenmeßeinrichtung durch Röntgenmeßverfahren genauer zu untersuchen. Dabei ist es denkbar, daß sich hierbei ergibt, daß die Art des Fehlers bestimmte Einsatzmöglichkeiten des Fahrzeugluftreifens noch ermöglicht. Andernfalls wird der Prüfling endgültig aussortiert. Da die Lage der Position des Fehlers bereits bekannt ist, kann die Röntgenmeßeinrichtung so ausgebildet sein, daß lediglich einzelne Reifenabschnitteüberprüft werden können.

Fig. 3 zeigt ein schematisches Röntgenbild eines solchen Abschnitts, bei dem die unterschiedliche Größe des Abstandes zwischen benachbarten Festigkeitsträgern genau erkennbar ist. Fehlerstellen 31 bzw. 31' weisen deutlich vergrößerte Abstände zwischen benachbarten Stahlcorden 10 auf.

Ist der Prüfling ein vulkanisierter Fahrzeugluftreifen, kann der für zufriedenstellend befundene Fahrzeugluftreifen direkt entweder weiteren andersartigen Qualitätskontrollen zugeführt oder zur Auslieferung fertiggestellt werden.

Ist der Prüfling 13 ein Rohling, so wird der für gut befundene Rohling zur Weiterverarbeitung beispielsweise einer Vulkanisiereinrichtung zugeführt. Die Rohlinge, die unzulässige Fehler aufweisen, können, soweit möglich, überarbeitet werden, um dann nochmals der Meßeinrichtung zur Überprüfung zugeführt zu werden. Andernfalls können sie in ihre Einzelbestandteile zerlegt und weitgehend wieder verwertet werden. Die der Vulkanisation zugeführten Rohlinge werden nach der Vulkanisation als fertige Fahrzeugluftreifen noch einmal einer Meßeinrichtung gemäß Fig. 1 zur Überprüfung zugeführt. Dadurch werden auch Fehler der Abstände zwischen benachbarten Stahlcorden im Seitenwandbereich ermittelt, die im Anschluß an die erste Messung, insbesondere während der Bombage in der Vulkanisiereinrichtung und der Vulkanisation, erzeugt werden. Nicht verwertbarer, vulkanisierter Reifenausschuß wird hierdurch auf die Zahl der Fahrzeugluftreifen reduziert, die erst in diesem letzten Herstellungsabschnitt in der Vulkanisationseinrichtung mit Fehlern behaftet wurden.
Die Länge der Rolle 7 ist so gewählt, daß sie für alle konventionellen Reifengrößen eine sichere Anlagefläche gewährleistet.

Fehler im Abstand zwischen benachbarten Corden setzen sich üblicherweise über die gesamte Reifenseitenwand fort, so daß sie von den Sensoren 5 und 6 sicher erkannt werden. Es ist denkbar, besonders bei Reifen mit sehr großen Seitenwänden zur Erhöhung der Sicherheit radial beabstandet zu den Sensoren 5 und 6 zusätzlich einen oder weitere Sensoren nach dem Magnetfeldstreuverfahren auszubilden, so daß an mehreren radialen Positionen gleichzeitig gemessen werden kann.

### Bezugszeichenliste

- 1.: Meßkopf
- 2.: Führungsschiene
- 3.: Gestell
- 4.: Rolle mit Endschatten
- 5.: Detektor
- 6.: Detektor
- 7.: Rolle
- 8.: Antriebsrolle
- 9.: Antriebsmotor
- 10.: Führungsschulter
- 11.: Auswerteeinheit
- 12.: Lagertisch
- 13.: Prüfling
- 14.: Stellmotor
- 15.: Stellmotor
- 16.: Nordpol
- 17.: Südpol
- 18.: Lagerhalle
- 19.: Sensorkopf
- 20.: Stahldraht
- 21.: Heterogene Magnetfeldlinien
- 27.: Grenzwert
- 28.: Toleranz
- 29.: Mittelwert
- 30.: Fehler
- 31.: Fehler
- 32.: Fehler
- 33.: Fehler

## Patentansprüche

1. Vorrichtung zur Ermittlung von Fehlern in der Anordnung von Festigkeitsträgern aus magnetisierbarem Material, insbesondere aus Stahl, in Karkassenlagen im Seitenwandbereich eines unvulkanisierten Reifenrohlings oder eines vulkanisierten Fahrzeugluftreifens,
- mit Mitteln zur drehbaren Lagerung des zu überprüfenden Reifenrohlings bzw. Fahrzeugluftreifens um seine Achse,
- mit zumindest einem Sensor zur Ermittlung von durch Fehler in der Anordnung von bewegten Festigkeitsträgern in einem heterogenen Magnetfeld erzeugten Induktion resultierenden Magnetfelds, der zumindest während des Messens in einer radialen Meßposition im radialen Bereich der Seitenwand angeordnet ist,
- insbesondere mit Mitteln zum Einstellen der radialen Postion des Sensors in Abhängigkeit vom Reifendurchmesser in eine radiale Sollposition des Reifens,
- insbesondere mit Mitteln zum Einstellen des axialen Abstandes zwischen zu messender Seitenwand und dem Sensor,
- mit Mitteln zum gesteuerten Verdrehen des zu überprüfenden Reifenrohlings bzw. Fahrzeugluftreifens,
- mit Mitteln zur Auswertung, mit denen der Sensor zur Weiterleitung der gemessenen resultierenden Feldstärke des Magnetfelds verbunden ist.

2. Vorrichtung zur Ermittlung gemäß den Merkmalen von Anspruch 1,
- bei der die Mittel zum gesteuerten Verdrehen zumindest ein rotatorisch angetriebenes umlaufendes Friktionsmittel aufweisen, das zur Antriebsübertragung zumindest beim Messen mit der Lauffläche des zu überprüfenden Rohlings bzw. Fahrzeugluftreifens in Friktionskontakt steht.

3. Vorrichtung zur Ermittlung gemäß den Mekmalen der Ansprüche 1 oder 2,
- wobei die Mittel zur Lagerung des Reifenrohlings bzw. des Fahrzeugluftreifens Mittel zur Lagerung in einer gegenüber der raumfesten Vertikalen seitlich geneigten Ebene aufweisen, bei der insbesondere seitliche Stützflächen zur drehbaren Stütze des Reifens beim Ermitteln in dieser seitlich geneigten Lage ausgebildet sind,
- wobei insbesondere wenigstens zwei parallele drehbare Rollen zum Abstützen der Lauffläche mit Schultern zum seitlichen Abstützen und wenigstens eine Rolle mit Ausrichtung parallel zur Äquatorebene des Reifenrohlings bzw. des Fahrzeugluftreifens in dessen Prüfposition zum seitlichen Stützen mit radialer Richtungskomponente ausgebildet ist.

4. Vorrichtung zur Ermittlung gemäß den Merkmalen von einem oder mehreren der Ansprüche 1 bis 3,
- mit einer Halteeinrichtung zum Halten des Sensors, die in radialer Position zum Fahrzeugluftreifen bzw. zum Reifenrohling in dessen Position während des Ermittelns verschiebbar ausgebildet ist,
- mit Mitteln zum Erfassen der radialen Position zum Verschieben des Sensors zum Reifenrohling bzw. zum Fahrzeugluftreifen in dessen Position während der Ermittlung, die mit Mitteln zum Einstellen der radialen Position in Wirkverbindung stehen.

5. Vorrichtung gemäß den Merkmalen von Anspruch 4,
- bei der die Mittel zum Erfassen der radialen Position wenigstens einen weiteren Sensor an der Halteeinrichtung aufweisen, der radial außerhalbdes Reifenrohlings bzw. des Fahrzeugluftreifens in dessen Position, die er in der Vorrichtung während der Ermittlung einnimmt, zum Erfassen des Abstandes zwischen diesem Sensor und der Lauffläche des Reifens ausgebildet ist.

6. Vorrichtung gemäß des Merkmales von Anspruch 4 oder 5,
- bei der in einem Gestell der Vorrichtung eine Führungsschiene und die Halteeinrichtung als korrespondierender Schlitten zum radialen Verschieben ausgebildet ist, wobei Mittel zum Verschieben des Schlittens in der Schiene, insbesondere einer kugelgelagerten Spindel, ausgebildet ist.

7. Vorrichtung gemäß den Merkmalen von einem oder mehreren der Ansprüche 1 bis 6,
- mit Mitteln zum Erfassen des seitlichen Abstandes zwischen Sensor und Seitenwand, die mit Mitteln zum Einstellen des seitlichen Abstandes zwischen dem Sensor zur Ermittlung der Lagefehler der Festigkeitsträger und der Seitenwand in Wirkverbindung stehen.

8. Vorrichtung gemäß den Merkmalen von Anspruch 7,
- wobei der Sensor zur Ermittlung der Lagefehler der Festigkeitsträger seitlich verschiebbar gelagert und mit einer steuerbar antreibbaren Spindel, insbesondere mit einer kugelgelagerten Spindel zum Verstellen der seitlichen Position in Wirkverbindung steht.

9. Vorrichtung gemäß den Merkmalen von einem oder mehreren der Ansprüche 1 bis 8,
- bei der die Mittel zur Auswertung mit einer Auswerteeinrichtung, insbesondere einem Computer, zum Ermitteln von Mittelwerten der von den Sensoren zur Ermittlung der Lagefehler gemessenen Magnetfeldänderungen beim Verdrehen des zur Überprüfung drehbar gelagerten Reifenrohlings bzw. Fahrzeugluftreifens über einen ersten vorgegebenen Drehwinkelbereich und zum Ermitteln der in Bezug auf diesen Mittelwert der ersten Messungen gebildeten Amplitudenhöhen der in einem anschließenden zweiten Drehwinkelbereich gemessenen Magnetfeldänderungen und zum Vergleich jeder Amplitudenhöhe der zweiten Messung mit Sollwerten für die maximale zulässige Amplitudenhöhe
- und mit Mitteln zur Anzeige der Winkelposition der außerhalb der zulässigen Werte liegenden ermittelten Amplituden am Reifenrohling bzw. am Fahrzeugluftreifen ausgebildet sind.

10. Vorrichtung gemäß den Merkmalen von einem oder mehreren der Ansprüche 1 bis 9,
- bei der wenigstens ein Sensor beiderseits des Raums für die Aufnahme des zu überprüfenden Reifenrohling bzw. des Fahrzeugreifens zur drehbaren Lagerung ausgebildet ist, von denen insbesondere einer in der Vorrichtung in seitlicher Position zum Reifen fest und der andere seitlich einstellbar angeordnet ist.

11. Verfahren zur Ermittlung von Fehlern in der Anordnung von Festigkeitsträgern aus magnetisierbarem Material, insbesondere aus Stahl, in Karkassenlagen im Seitenwandbereich eines unvulkanisierten Reifenrohlings oder eines vulkanisierten Fahrzeugluftreifens,
- bei dem durch Relativbewegung zwischen einem Sensor und den Festigkeitsträgern unter einem Winkel zwischen Bewegungsrichtung und Ausrichtung der Festigkeitsträger von größer 0°, die durch die Bewegung in einem heterogenen Magnetfeld durch Induktion erzeugten resultierenden Magnetfeldstärken gemessen werden,
- bei dem in einem ersten Schritt durch Verdrehen des Reifenrohlings bzw. des Fahrzeugluftreifens in einem ersten Winkelbereich der resultierende Magnetfeldstärkeverlauf gemessen und daraus ein Mittelwert ermittelt wird,
- bei dem im Anschluß daran bei Weiterverdrehen des Reifenrohlings bzw. des Fahrzeugluftreifens in einem zweiten Winkelbereich der Magnetfeldstärkeverlauf in diesem zweiten Winkelbereich gemessen und daraus der Abweichungsverlauf der gemessenen Werte des zweiten Winkelabschnitts zu dem Mittelwert des ersten Winkelbereichs ermittelt, bei dem die Abweichungen mit Sollwerten für die zulässigen Abweichungen verglichen werden und bei dem die Drehwinkel bzw. die Umfangsposition am Reifenrohling bzw. am Fahrzeugreifen der Lage von Abweichungen, die über dem Sollwert liegen, als Drehwinkel bzw. Umfangsposition von Anordnungsfehlern benachbarter Festigkeitsträger der Reifenseitenwand angezeigt werden.

12. Verfahren gemäß den Merkmalen von Anspruch 11,
- bei dem nach der Feststellung der Lage von einem oder mehreren Anordnungsfehlern die Größe des ermittelten Anordnungsfehlers in einem Röntgenmeßverfahren ermittelt wird.
